(19) Europäisches Patentamt
European Patent Office
Office européen des brevets

(11) **EP 4 338 899 A1**

(12) **EUROPEAN PATENT APPLICATION**
published in accordance with Art. 153(4) EPC

(43) Date of publication:
**20.03.2024 Bulletin 2024/12**

(21) Application number: **22807250.0**

(22) Date of filing: **28.03.2022**

(51) International Patent Classification (IPC):
*B25J 13/08* (2006.01)

(52) Cooperative Patent Classification (CPC):
**B25J 13/08**

(86) International application number:
**PCT/JP2022/015156**

(87) International publication number:
**WO 2022/239545 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2021 JP 2021081072**

(71) Applicant: **OMRON Corporation
Kyoto 600-8530 (JP)**

(72) Inventors:
• **OKI, Kentaro
Kyoto-shi, Kyoto 600-8530 (JP)**
• **MATOBA, Shunsuke
Kyoto-shi, Kyoto 600-8530 (JP)**

(74) Representative: **SONN Patentanwälte GmbH & Co
KG
Riemergasse 14
1010 Wien (AT)**

(54) **WORKING STATE DETERMINATION DEVICE, METHOD, AND PROGRAM**

(57) An acquisition unit (32) acquires data detected by a force sensor that detects a force acting on an hand tip portion of a robot hand, and a determination unit (38) determines a working state of the robot hand by inputting data acquired by the acquisition unit (32) to a determiner 36 that determines the working state of the robot hand and in which a first determiner that extracts a feature of a normal working state and a second determiner that extracts a feature of an abnormal working state are coupled, the determiner (36) outputting three states as the working state, the three states being a work completion state, a work continuation state, and a work continuation impossible state.

FIG.4

EP 4 338 899 A1

## Description

Technical Field

The present disclosure relates to a working state determination device, a working state determination method, and a working state determination program.

Background Art

In assembly work by a robot at a manufacturing site, a technique of simplifying adjustment work without using a jig or the like by advancing intelligence of the robot has been studied. For example, a determination method using a Recurrent Neural Network (RNN) for assembly work of a work having a snap-fit has been proposed (see Non Patent Literature 1). In this method, attention is paid to a transient change of a robot arm tip reaction force when a workpiece is fitted, and the RNN is configured and learned with a small time duration in which the transient waveform is captured.

Furthermore, for example, a robot system that determines whether work is good or bad depending on various causes in fitting and insertion work has been proposed (see Patent Literature 1). In this system, a feature amount existence range at the time of successful work and a feature amount existence range at the time of failure are calculated for each failure cause, an existence area of each feature amount is recorded, and work quality and a cause at the time of failure are determined depending on which feature amount existence area the feature amount at the time of work execution is in.

PRIOR ART DOCUMENT

Patent Literature

Patent Literature 1: Japanese Patent Application Laid-Open (JP-A) No. 2011-230245 Non Patent Literature

Non Patent Literature 1: M. Karlsson, A. Robertsson, and R. Johansson, "Detection and control of contact force transients in robotic manipulation without a force sensor", In 2018 IEEE International Conference on Robotics and Automation (ICRA), 2018.

SUMMARY OF INVENTION

Technical Problem

In the related art, it is possible to determine whether assembly work is completed or not completed. However, in an actual manufacturing site, for example, there is also an abnormal system in which assembly work cannot be continued unless regrasping work of a workpiece is performed. In the prior art, there is a problem that such an abnormal system cannot be determined or a determiner needs to be adjusted on a one-by-one basis by feature engineering.

The present disclosure has been made in view of the above points, and an object thereof is to determine a working state including a normal system and an abnormal system.

Solution to Problem

In order to achieve the above object, a working state determination device according to the present disclosure includes an acquisition unit configured to acquire data detected by a force sensor that detects a force acting on a hand tip portion of a robot hand, and a determination unit configured to determine a working state of the robot hand by inputting data acquired by the acquisition unit to a determiner that determines the working state of the robot hand and in which a first determiner that extracts a feature of a normal working state and a second determiner that extracts a feature of an abnormal working state are coupled, the determiner outputting three states as the working state, the three states being a work completion state, a work continuation state, and a work continuation impossible state.

In addition, time-series data acquired by the acquisition unit may be input to the determiner, and a time duration of data input to the second determiner may be longer than a time duration of data input to the first determiner.

The time duration for the first determiner may be a time duration corresponding to a transient response of data generated at the time of work completion, and the time duration for the second determiner may be a time duration corresponding to a time until an abnormality occurs and the operation of the robot hand is stopped.

In addition, the first determiner may be learned by using learning data in which each piece of data before transition of the time-series data in a case in which the working state transitions from work continuation to work completion is labeled as work continuation and the data after transition is labeled as work completion, and the second determiner may be learned by using learning data in which data before transition of the time-series data in a case in which the working state transitions from work continuation to work continuation impossible is labeled as work continuation and the data after transition is labeled as work continuation impossible.

The working state determination device according to the present disclosure may further include a learning unit that executes learning of the determiner using the learning data.

Furthermore, the learning unit may generate pseudo learning data using the learning data and a random number, add the pseudo learning data to the learning data, and use the pseudo learning data for learning by the determiner.

The acquisition unit may further acquire a position of the hand tip portion of the robot hand, and the determination unit may determine the working state by inputting data detected by the force sensor and the position of the hand tip portion to the determiner.

Furthermore, the determiner may include a first neural network constituting the first determiner and a second neural network constituting the second determiner, and may output a result obtained by combining an output of the first neural network and an output of the second neural network.

The working state determination device according to the present disclosure may further include a control unit that controls the operation of the robot hand on the basis of the working state determined by the determination unit.

The working state determination method according to the present disclosure is a method in which an acquisition unit acquires data detected by a force sensor that detects a force acting on an hand tip portion of a robot hand, and a determination unit determines a working state of the robot hand by inputting data acquired by the acquisition unit to a determiner that determines the working state of the robot hand and in which a first determiner that extracts a feature of a normal working state and a second determiner that extracts a feature of an abnormal working state are coupled, the determiner outputting three states as the working state, that is, a work completion state, a work continuation state, and a work continuation impossible state.

The working state determination program according to the present disclosure is a program for causing a computer to function as an acquisition unit configured to acquire data detected by a force sensor that detects a force acting on an hand tip portion of a robot hand, and as a determination unit configured to determine a working state of the robot hand by inputting data acquired by the acquisition unit to a determiner that determines the working state of the robot hand and in which a first determiner that extracts a feature of a normal working state and a second determiner that extracts a feature of an abnormal working state are coupled, the determiner outputting three states as the working state, the three states being, a work completion state, a work continuation state, and a work continuation impossible state.

Advantageous Effects of Invention

According to the working state determination device, the method, and the program according to the present disclosure, the working state including the normal system and the abnormal system can be determined.

BRIEF DESCRIPTION OF DRAWINGS

Fig. 1 shows a configuration diagram schematically illustrating a robot system.

Fig. 2 shows a diagram for explaining each working state.
Fig. 3 shows a block diagram illustrating a hardware configuration of a working state determination device.
Fig. 4 shows a block diagram illustrating an example of a functional configuration of the working state determination device.
Fig. 5 shows a diagram for explaining generation of learning data.
Fig. 6 shows a diagram illustrating an example of a determiner.
Fig. 7 shows a flowchart illustrating a flow of learning processing.
Fig. 8 shows a flowchart illustrating a flow of determination control processing.
Fig. 9 shows a diagram for explaining generation of pseudo learning data.

DESCRIPTION OF EMBODIMENT

Hereinafter, an example of an embodiment of the present disclosure will be described with reference to the drawings. In the drawings, the same or equivalent components and portions are denoted by the same reference numerals. In addition, dimensions and ratios of the drawings are exaggerated for convenience of description, and may be different from actual ratios.

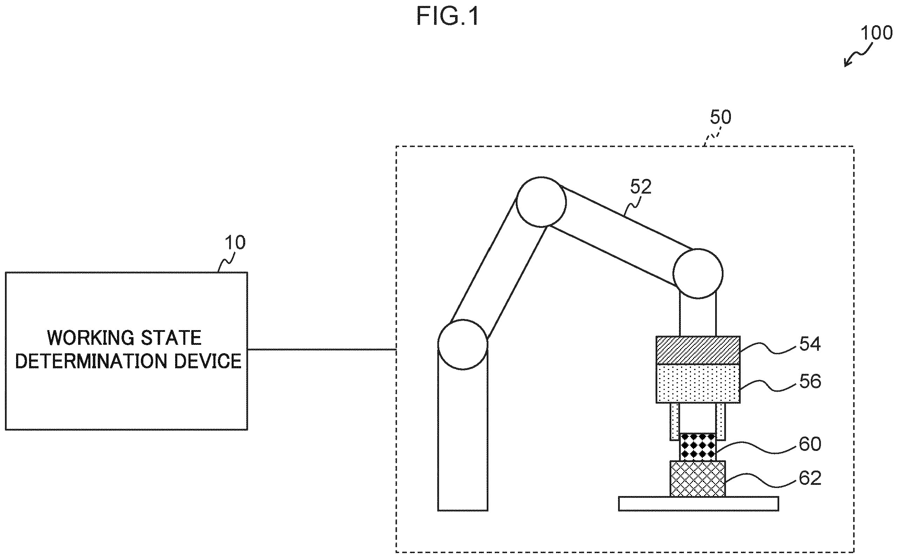

As illustrated in Fig. 1, a robot system 100 according to the present embodiment includes a working state determination device 10 and a robot unit 50. The robot unit 50 includes a manipulator 52 including a gripper 56 as a hand tip portion, and a force sensor 54. The manipulator 52 is an example of a "robot hand" of the disclosed technology, and the gripper 56 is an example of a "hand tip portion" of the disclosed technology.

The manipulator 52 is, for example, a vertical articulated robot having a configuration of six degrees of freedom necessary for operation in a three-dimensional space. The degree of freedom of the manipulator 52 may be seven degrees of freedom obtained by adding a redundant degree of freedom to six degrees of freedom. The manipulator 52 drives each joint such that a rotation angle of each joint becomes an angle corresponding to control information (details will be described later) output from the working state determination device 10. As a result, the gripper 56 is controlled to be at the designated position and orientation. In addition, the manipulator 52 outputs the current rotation angle of each joint to the working state determination device 10.

The gripper 56 preferably has versatility capable of gripping various workpieces in various gripping states, and has a configuration for preventing large gripping deviation. For example, the gripper 56 may be a parallel two-finger gripper in which non-slip rubber is attached to a surface for gripping the workpiece.

The force sensor 54 is installed between the wrist portion of the manipulator 52 and the gripper 56, detects external force values in six directions of three parallel axes and three rotation axes acting on the gripper 56, and outputs the values as force sensor values. The force sensor value is an example of "data detected by the force sensor" of the disclosed technology.

The working state determination device 10 controls the operation of the manipulator 52 while determining the working state by the manipulator 52. In the present embodiment, as illustrated in Fig. 1, an operation of inserting a main workpiece 60 gripped by the gripper 56 into a sub-workpiece 62 on the work bench is assumed. The main workpiece 60 is, for example, a connector, and the sub-workpiece 62 is, for example, a socket. In the present embodiment, the main workpiece 60 and the sub-workpiece 62 are joined by snap-fit when the main workpiece 60 is appropriately inserted into the sub-workpiece 62.

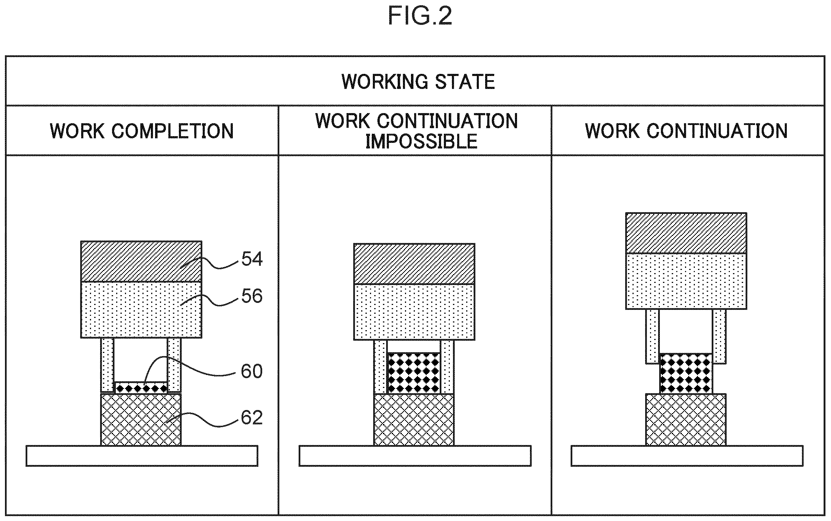

In the present embodiment, as the working state to be determined, work completion, work continuation impossible, and work continuation are set as illustrated in Fig. 2. The work completion is a state in which the insertion of the main workpiece 60 into the sub-workpiece 62 is completed. The work continuation impossible is a state in which the tip of the gripper 56 interferes or the like with the sub-workpiece 62 before the insertion of the main workpiece 60 into the sub-workpiece 62 is completed, and the work cannot be continued unless the gripper 56 performs the regrasping work of the main workpiece 60. The work continuation is a state in which the work of inserting the main workpiece 60 into the sub-workpiece 62 can be continued.

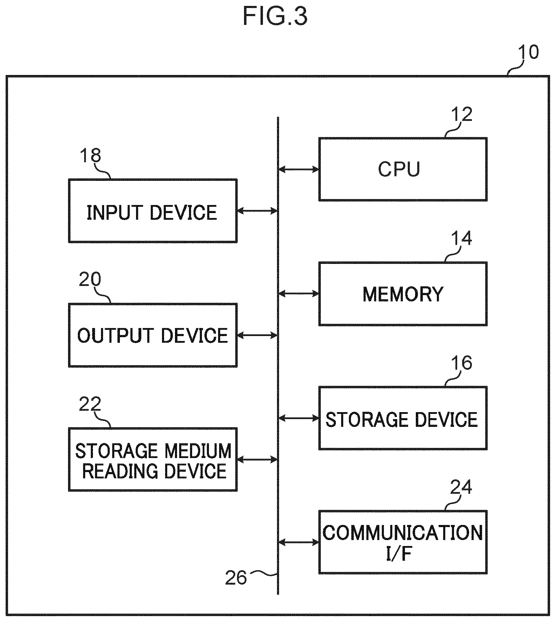

Fig. 3 is a block diagram illustrating a hardware configuration of the working state determination device 10 according to the present embodiment. As illustrated in Fig. 3, the working state determination device 10 includes a central processing unit (CPU) 12, a memory 14, a storage device 16, an input device 18, an output device 20, a storage medium reading device 22, and a communication interface (I/F) 24. The respective components are communicably connected to each other via a bus 26.

The storage device 16 stores a working state determination program for executing learning processing and determination control processing to be described later. The CPU 12 is a central processing unit, and executes various programs and controls each configuration. That is, the CPU 12 reads the program from the storage device 16 and executes the program using the memory 14 as a work area. The CPU 12 performs control of each of the above-described configurations and various types of arithmetic processing according to a program stored in the storage device 16.

The memory 14 includes a random access memory (RAM), and temporarily stores a program and data as a work area. The storage device 16 includes a read only memory (ROM), a hard disk drive (HDD), a solid state drive (SSD), and the like, and stores various programs including an operating system and various data.

The input device 18 is a device for performing various inputs, such as a keyboard and a mouse. The output device 20 is, for example, a device for outputting various types of information, such as a display and a printer. A touch panel display may be employed as the output device 20 to function as the input device 18. The storage medium reading device 22 reads data stored in various storage media such as a compact disc (CD)-ROM, a digital versatile disc (DVD)-ROM, a Blu-ray disc, and a universal serial bus (USB) memory, writes data to the storage medium, and the like. The communication I/F 24 is an interface for communicating with other devices, and for example, standards such as Ethernet (registered trademark), FDDI, and Wi-Fi (registered trademark) are used.

Next, a functional configuration of the working state determination device 10 according to the first embodiment will be described.

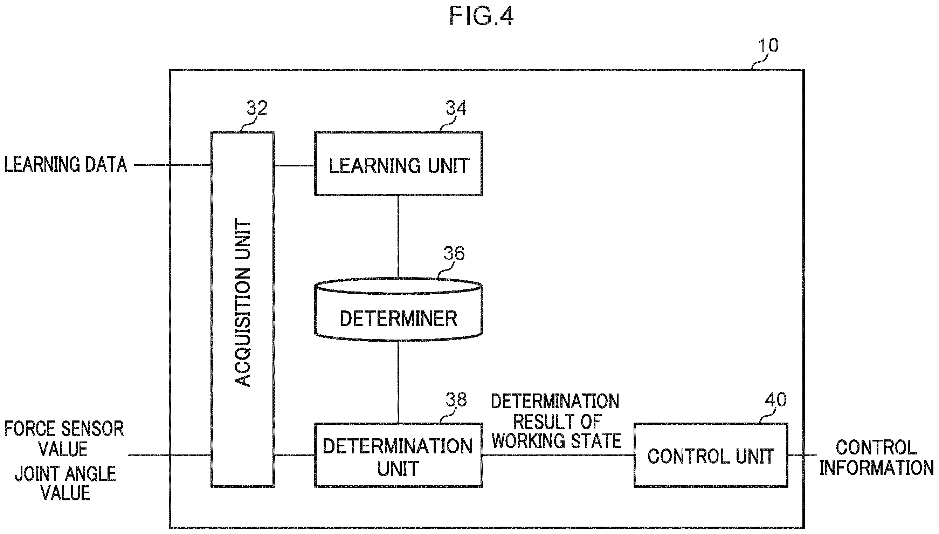

Fig. 4 shows a block diagram illustrating an example of a functional configuration of the working state determination device 10. As illustrated in Fig. 4, the working state determination device 10 includes an acquisition unit 32, a learning unit 34, a determination unit 38, and a control unit 40 as a functional configuration. Each functional configuration is implemented by the CPU 12 reading the working state determination program stored in the storage device 16, developing the working state determination program in the memory 14, and executing the working state determination program. In addition, a determiner 36 is stored in a predetermined storage area of the working state determination device 10.

The acquisition unit 32 acquires learning data input to the working state determination device 10 at the time of learning processing. The learning data is data in which the force sensor value detected by the force sensor 54 at each time and the information on the arm tip position of the gripper 56 at each time are associated with the label indicating the correct answer of the working state at each time. The information on the arm tip position of the gripper 56 (hereinafter, also simply referred to as "arm tip position") may be an absolute position of a predetermined position such as the tip of the gripper 56, or may be a relative movement amount or an absolute movement amount of a predetermined position during one time step. The arm tip position is obtained by matrix calculation based on the rotation angle (hereinafter, referred to as "joint angle value") of each joint output from the manipulator 52 and the kinematics information of the manipulator 52.

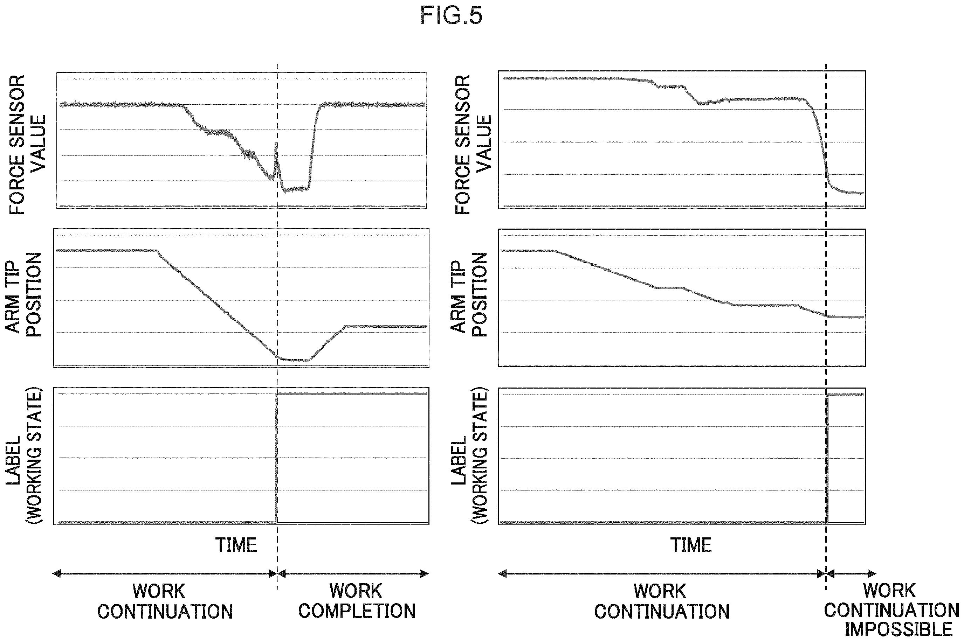

Here, generation of learning data will be described. As described above, in the present embodiment, three working states of work completion, work continuation impossible, and work continuation are determined. Therefore, when the working state transitions from the work continuation to the work completion, as indicated by a broken line in the left diagram of Fig. 5, the time corresponding to the peak of the transient response in the force sensor value is specified as the time when the working state is switched. This is to specify the timing at which the work is completed on the basis of a waveform indicating a transient response generated when the main workpiece 60 is inserted into the sub-workpiece 62 in the work to which the snap-fit assumed in the present embodiment is applied. Note that, in Fig. 5, the force sensor value represents a force sensor value related to a vertical force acting on the gripper 56. Then, using the specified time as a reference for the transition of the working state, the work continuation label is attached to the data at each time before the transition of the time-series data of the force sensor value and the arm tip position, and the work completion label is attached to the data at each time after the transition.

Furthermore, when the working state transitions from the work continuation to the work continuation impossible, as indicated by a broken line in the right diagram of Fig. 5, the timing at which the manipulator 52 stops the operation is specified as the time when the working state is switched. The timing at which the manipulator 52 stops the operation may be a timing at which the force sensor value becomes equal to or less than a predetermined value. This is a timing at which the manipulator 52 stops on the basis of a phenomenon in which the gripper 56 interferes with the sub-workpiece 62 and the force sensor value gradually decreases. Then, using the specified time as a reference for the transition of the working state, the work continuation label is attached to the data at each time before the transition of the time-series data of the force sensor value and the arm tip position, and the work continuation impossible label is attached to the data at each time after the transition.

When the learning data is generated as described above, the number of pieces of learning data to which each label of work completion and work continuation impossible is given is smaller than the number of pieces of learning data to which the label of work continuation is given, and the number of pieces of learning data is biased. Therefore, learning data of a small number of labels may be copied and increased so that the number of pieces of learning data for each label is about the same. As a result, over-learning can be prevented, and generalization performance can be prevented from being impaired.

When acquiring the learning data, the acquisition unit 32 passes the acquired learning data to the learning unit 34. Hereinafter, learning data in a case where the working state transitions from work continuation to work completion is referred to as "normal system learning data", and learning data in a case in which the working state transitions from work continuation to work continuation impossible is referred to as "abnormal system learning data".

In addition, the acquisition unit 32 acquires the force sensor value output from the force sensor 54 and the joint angle value output from the manipulator 52 during the determination control processing. The acquisition unit 32 calculates the arm tip position by matrix calculation on the basis of the acquired joint angle value and the kinematics information of the manipulator 52. The acquisition unit 32 associates the acquired force sensor value with the calculated arm tip position to obtain target data, and delivers the target data to the determination unit 38.

The learning unit 34 uses the learning data transferred from the acquisition unit 32 to execute learning of parameters of the determiner 36 that determines the working state of the manipulator 52. The determiner 36 may include, for example, a deep neural network (DNN). In the present embodiment, a case in which the determiner 36 is configured by a Recurrent Neural Network (RNN) for time-series data will be described.

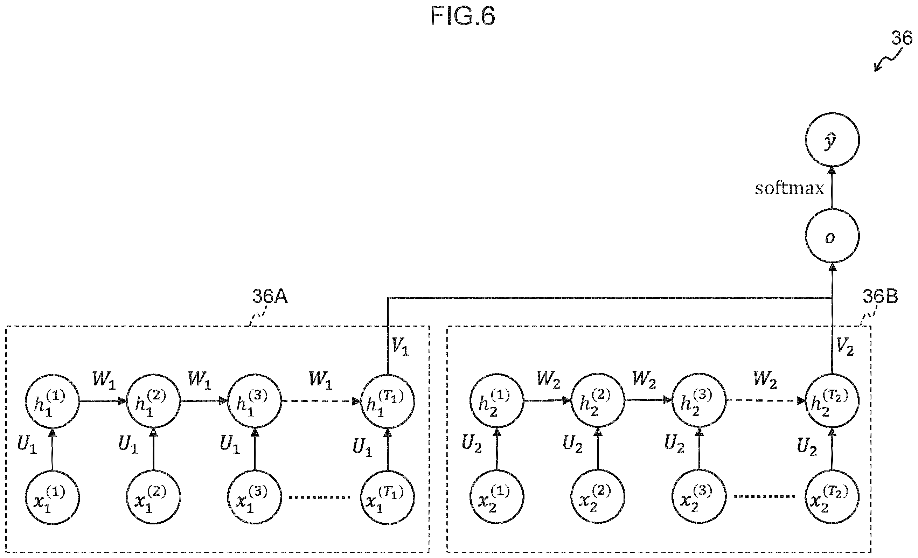

Fig. 6 illustrates an example of the determiner 36. In the example of Fig. 6, the determiner 36 includes a first determiner 36A from which the feature of the normal working state is extracted and a second determiner 36B from which the feature of the abnormal working state is extracted. The determiner 36 includes an input layer, an intermediate layer, and an output layer. A vector value $x_i^{(t)}$ at each time of the learning data is input to each neuron of the input layer. i is a number for identifying the first determiner 36A and the second determiner 36B, i = 1 represents the first determiner 36A, and i = 2 represents the second determiner 36B. Furthermore, $x_i^{(t)}$ is a vector value obtained by combining the vector value $F^{(t)}$, which is the force sensor value at time t, and the vector value $P^{(t)}$ at the arm tip position, t is 1, 2,..., $T_i$.

A weighted value of the value output from each neuron of the corresponding input layer is input to each neuron of the intermediate layer. In addition, a value weighted to a value output from a neuron in the intermediate layer of one time ago is input to each neuron in the intermediate layer. Each neuron in the intermediate layer outputs a value obtained by applying the activation function to the input value to the neuron in the intermediate layer of one time later. For example, each neuron in the intermediate layer may output the following vector value $h_i^{(t)}$.

$$h_i^{(1)} = \tanh(b_i + U_i x_i^{(1)})$$

$$h_i^{(t)} = \tanh(b_i + W_i h_i^{(t-1)} + U_i x_i^{(t)})$$

$$i \in [1;2],\ t \in [2;T_i]$$

$U_i$ is a parameter representing a weight applied to a value output from each neuron of the input layer, and $W_i$ is a parameter representing a weight applied to a value output from each neuron of the intermediate layer of one time ago. Furthermore, tanh is an example of an activation function, and $b_i$ is a parameter representing bias. The output $h_1^{(T-1)}$ of the intermediate layer of the first determiner 36 is a vector value obtained by characterizing the force sensor value and the arm tip position at time t = 1 to t = Ti. The output $h_2^{(T\_2)}$ of the intermediate layer of the second determiner 36B is a vector value obtained by characterizing the force sensor value and the arm tip position at times t = 1 to t = $T_2$.

For example, as described below, the output layer combines the output from the first determiner 36A and the output from the second determiner 36B, and outputs a determination result.

$$o = c + V_1 h_1^{(T\_1)} + V_2 h_2^{(T\_2)}$$

$$y^{\wedge} = softmax(o)$$

$V_i$ is a weight related to the output $h_i^{(T\_i)}$ from the neuron of the intermediate layer of t = Ti, c is a parameter, and softmax is an example of an activation function. $y^{\wedge}$ (in Fig. 6, "^(hat)" is placed on "y") is a determination result of the working state, and is a three-dimensional vector representing a probability that the current working state is the work completion, a probability that the working state is work continuation impossible, and a probability that the working state is work continuation. The output layer may output a working state having the highest probability as a determination result.

Here, the time duration $T_i(i \in [1;2)$ to be input to each of the first determiner 36A and the second determiner 36B is described. As described above, in a case in which the working state transitions from the work continuation to the work completion, as illustrated in the left diagram of Fig. 5, a waveform indicating a transient response is generated in the force sensor value at the time of switching of the working state. Therefore, as Ti, it is preferable to set a time duration of a waveform of a characteristic transient response that implies a state to be determined. However, when the working state transitions from the work continuation to the work continuation impossible, the interference between the gripper 56 and the sub-workpiece 62 occurs, so that a waveform indicating a gradual decrease in the force sensor value is generated as illustrated in the right diagram of Fig. 5. Therefore, as $T_2$, it is preferable to set a time duration longer than Ti, which can capture this gentle change in waveform. As described above, by setting an appropriate time duration according to the characteristics of each of the normal system and the abnormal system in the determiner 36, the number of pieces of learning data can be relatively reduced.

The learning unit 34 determines the parameters of the determiner 36 by executing the learning of the determiner 36 as described above using the learning data delivered from the acquisition unit 32. Specifically, the learning unit 34 first determines Ti and $T_2$. For example, the learning unit 34 may determine $T_1$ and $T_2$ by receiving $T_1$ and $T_2$ designated by the user on the basis of the learning data. Furthermore, the learning unit 34 may determine $T_1$ and $T_2$ that can obtain the most accurate output by executing learning while changing the time duration of each of $T_1$ and $T_2$ by a predetermined value.

The learning unit 34 sets the determined $T_1$ and $T_2$ in the first determiner 36A and the second determiner 36B, respectively, and adds a provisional output layer as described below to the output $h_i^{(T-i)}$ of the intermediate layer.

$$o_i = c_i + V_i h_i^{(T\_i)}$$

$$y_i^{\wedge} = softmax(o_i), i \in [1;2]$$

The learning unit 34 inputs the normal system learning data to the first determiner 36A to which the temporary output layer is added, and inputs the abnormal system learning data to the second determiner 36B to which the temporary output layer is added. Then, the learning unit 34 determines the parameters $U_i$, $W_i$, and $b_i$ included in the input layer and the intermediate layer of the determiner 36 so as to minimize the difference (for example, cross entropy or the like) between the output value $y_i^{\wedge}$ and the label given to the learning data.

Furthermore, the learning unit 34 inputs the learning data to the determiner 36 after fixing $T_i$, $U_i$, $W_i$, and $b_i$ determined as described above. Then, the learning unit 34 determines the parameters $V_i$ and c included in the output layer so as to minimize the difference (for example, cross entropy or the like) between the output value $y^{\wedge}$ and the label given to the learning data. The learning data input to the determiner 36 here may be learning data different from the learning data used when the parameters of the input layer and the intermediate layer are determined. In addition, the normal system learning data and the abnormal system learning data used when the parameters of the input layer and the intermediate layer are determined may be randomly mixed and used.

The learning unit 34 stores the determiner 36 in which the parameters $T_i$, $U_i$, $W_i$, $b_i$, $V_i$, and c are determined as described above in a predetermined storage area.

The determination unit 38 inputs the target data delivered from the acquisition unit 32 to the determiner 36, determines the current working state, and delivers the determination result to the control unit 40.

The control unit 40 determines the action of the manipulator 52 on the basis of the working state indicated by the determination result delivered from the determination unit 38. For example, the control unit 40 may determine an action on the basis of a predetermined action rule of the manipulator 52 according to the working state. As the action rule, for example, in a case in which the working state is work completion, returning to the initial posture, in a case in which the working state is work continuation impossible, regrasping of the main work 60, and the like may be determined. The control unit 40 generates control information for causing the manipulator 52 to execute an action corresponding to the determined action. Specifically, the control information is a rotation angle of each joint for achieving the posture of the manipulator 52 in the determined action. The control unit 40 outputs the generated control information to the manipulator 52.

Next, the operation of the robot system 100 according to the present embodiment will be described.

When learning data is input to the working state determination device 10 and learning of the determiner 36 is instructed, the working state determination device 10 executes learning processing. Then, when work by the manipulator 52 is started in a state where the determiner 36 on which learning has been executed is stored in a predetermined storage area, determination control processing is executed in the working state determination device 10. The learning processing and the determination control processing are examples of a "working state determination method" of the disclosed technology.

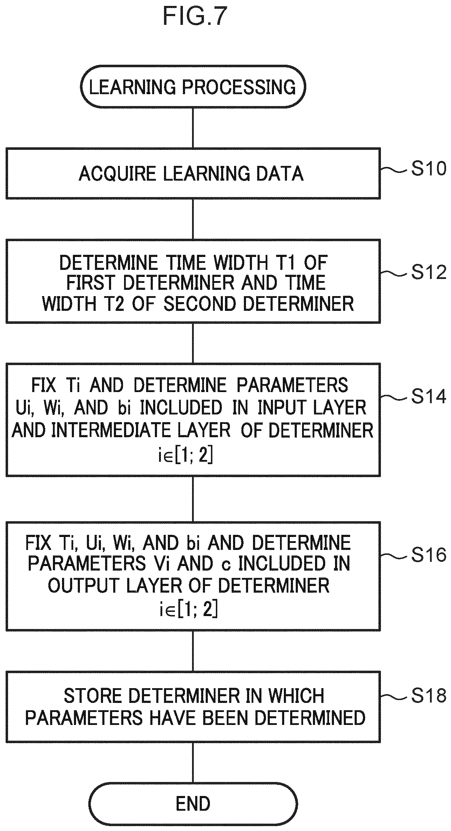

Fig. 7 is a flowchart illustrating a flow of learning processing executed by the CPU 12 of the working state determination device 10. When the CPU 12 reads the working state determination program from the storage device 16, develops the working state determination program in the memory 14, and executes a process related to the learning processing, the CPU 12 functions as each functional configuration of the working state determination device 10, and the learning processing illustrated in Fig. 7 is executed.

In step S10, the acquisition unit 32 acquires the learning data including the normal system and the abnormal system input to the working state determination device 10 and delivers the learning data to the learning unit 34. Next, in step S12, the learning unit 34 determines the time duration $T_i$ of the first determiner 36A and the time duration $T_2$ of the second determiner 36B by receiving $T_1$ and $T_2$ from the user.

Next, in step S14, the learning unit 34 sets the determined $T_1$ and $T_2$ in the first determiner 36A and the second determiner 36B, respectively, and adds a temporary output layer to the output $h_i^{(T-i)}$ of the intermediate layer. The learning unit 34 inputs the normal system learning data to the first determiner 36A to which the temporary output layer is added, and inputs the abnormal system learning data to the second determiner 36B to which the temporary output layer is added. Then, the learning unit 34 determines the parameters $U_i$, $W_i$, and $b_i$ ($i \in [1;2]$) included in the input layer and the intermediate layer of the determiner 36 so as to minimize the difference between the output value of the temporary output layer and the label given to the learning data.

Next, in step S16, the learning unit 34 inputs the learning data to the determiner 36 after fixing $T_i$, $U_i$, $W_i$, and $b_i$ determined in steps S12 and S14. Then, the learning unit 34 determines the parameters $V_i$ and c included in the output layer so as to minimize the difference between the output value of the output layer and the label given to the learning data.

Next, in step S18, the learning unit 34 stores the determiner 36 in which the parameters $T_i$, $U_i$, $W_i$, $b_i$, $V_i$, and c have been determined in steps S12 to S16 in a predetermined storage area, and the learning processing ends.

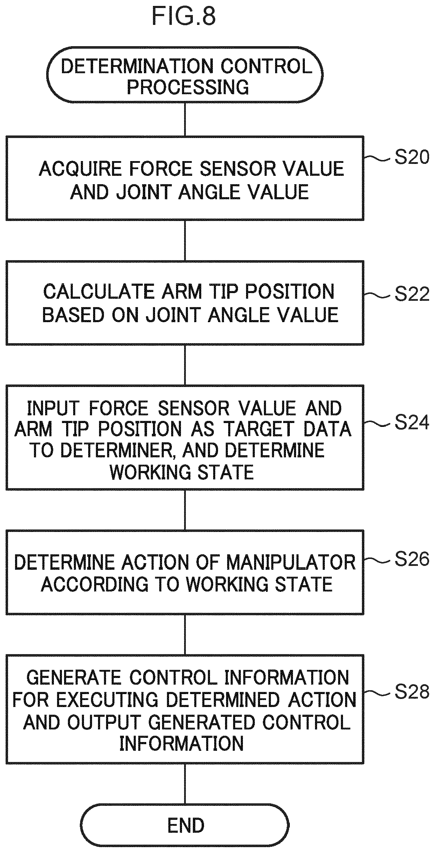

Fig. 8 is a flowchart illustrating a flow of determination control processing executed by the CPU 12 of the working state determination device 10. When the CPU 12 reads the working state determination program from the storage device 16, develops the working state determination program in the memory 14, and executes a process related to the determination control processing, the CPU 12 functions as each functional configuration of the working state determination device 10, and the determination control processing illustrated in Fig. 8 is executed.

In step S20, the acquisition unit 32 acquires the force sensor value output from the force sensor 54 and the joint angle value output from the manipulator 52. Next, in step S22, the acquisition unit 32 calculates the arm tip position by matrix calculation based on the acquired joint angle value and the kinematics information of the manipulator 52.

Next, in step S24, the acquisition unit 32 associates the force sensor value acquired in step S20 with the arm tip position calculated in step S22 to obtain target data, and delivers the target data to the determination unit 38. The determination unit 38 shifts the vector value $x_i^{(t)}$ input to each neuron of the input layer of the determiner 36 to a neuron of one time ago, and inputs the target data delivered from the acquisition unit 32 to a neuron of the input layer corresponding to $x_i^{(t)}$. Then, the determination unit 38 determines the current operation state on the basis of the output value from the output layer of the determiner 36, and passes the determination result to the control unit 40.

Next, in step S26, the control unit 40 determines the action of the manipulator 52 on the basis of the working state indicated by the determination result delivered from the determination unit 38. Next, in step S28, the control unit 40 generates control information for causing the manipulator 52 to execute an action corresponding to the determined action, and outputs the control information to the manipulator 52. Then, the determination control processing ends.

As described above, in the robot system according to the present embodiment, the working state determination device acquires the force sensor value and the arm tip position of the gripper of the manipulator. Then, the force sensor value and the arm tip position are input to the determiner that is coupled with the first determiner that extracts a characteristic of the normal working state and the second determiner that extracts a characteristic of the abnormal working state and determines the manipulator working state. The working state determination device determines whether the working state is work completion, work continuation, or work continuation impossible on the basis of the output value of the determiner, and controls the manipulator on the basis of the determination result. As a result, the working state including the normal system and the abnormal system can be determined.

In addition, according to the present embodiment, since the working state in which the work continuation impossible can also be determined, it is possible to promote the automation of the work by the robot system, for example, by automatically executing the operation such as regrasping the work even when the assembly work for various works is targeted. In addition, according to the present embodiment, since the user is released from feature engineering such as setting a threshold of a force sensor value for each target workpiece, it is possible to reduce a burden of starting a production line of automatic assembly.

In addition, according to the present embodiment, when the waveforms of the force sensor values in each of the normal system and the abnormal system are similar to the learning data used for learning of the determiner, the working state can be determined with high accuracy even for work on a workpiece different from the workpiece used for learning. For example, it is possible to determine the working state of the unlearned insertion and assembly work of the 9-pin type in-vehicle connector by using a determiner learned using a force sensor value at the time of the insertion and assembly work of the 4-pin type in-vehicle connector as learning data.

In addition, by making the time duration of the data input to the second determiner longer than the time duration of the data input to the first determiner, it is possible to grasp the characteristics of the data of the normal system and the abnormal system and to accurately determine the operation state.

In the embodiment, the case in which the force sensor value and the arm tip position are used as the data to be input to the determiner has been described, but the arm tip position is not essential, and at least the force sensor value may be used as an input.

In addition, when both the force sensor value and the arm tip position are used, the determination may be made by a logical product (AND) or a logical sum (OR) of the force sensor value and the arm tip position. In the first determiner that determines whether the working state is work continuation or work completion, it is desirable to perform the AND determination in order to prevent the occurrence of the defective product when the work incomplete product is erroneously determined to be completed. In the second determiner that determines whether the working state is work continuation or work continuation impossible, whether to perform the AND determination or the OR determination may be set according to the content of the work, the coping method at the time of work continuation impossible, and the like. In order to perform such an AND determination or an OR determination, it is only required to execute learning of the determiner by using learning data labeled according to the AND condition or the OR condition. In a case in which learning data labeled with respect to an AND condition of a force sensor value and an arm tip position is used, a determiner that realizes an AND determination is used, and in a case in which learning data labeled with respect to an OR condition is used, a determiner that realizes an OR determination is used.

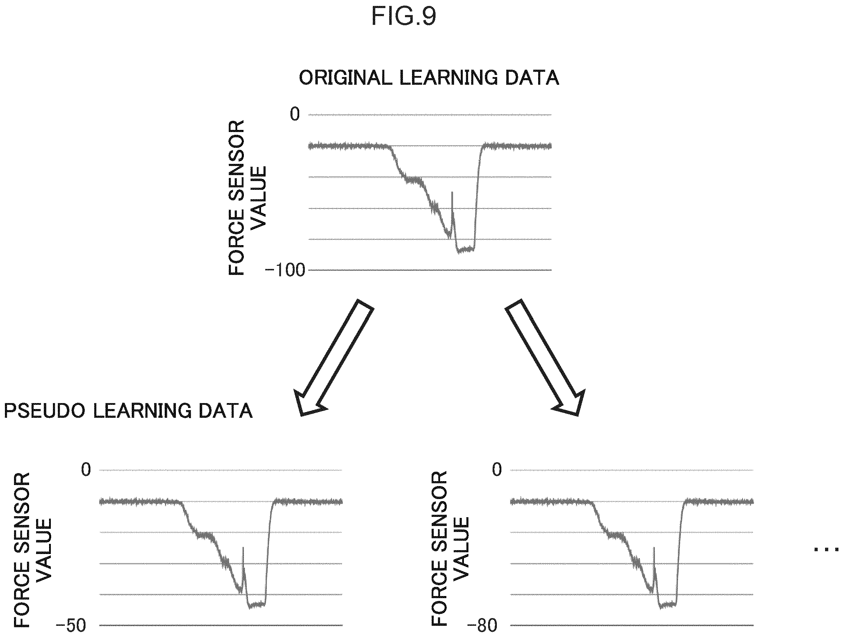

In addition to the data actually acquired from the force sensor or the manipulator (original learning data), learning data generated in a pseudo manner using a random number may be used as the learning data. Specifically, a random number is determined from a variation element of data that can occur on site, such as sensor noise and a scale of force sensor values, and pseudo learning data is generated on the basis of the determined random number. For example, as illustrated in Fig. 9, the pseudo learning data may be generated by performing scale conversion on the force sensor value, which is the original learning data, by multiplying the generated random number or the like. By adding the pseudo learning data generated in this manner to the original learning data and executing learning, it is possible to learn an accurate determiner using a smaller number of learning data of the site.

Furthermore, in the embodiment, the case in which each functional configuration is implemented by one computer has been described, but the present invention is not limited thereto. For example, the working state determination device including the acquisition unit, the learning unit, and the determination unit and the control device including the control unit may be implemented by different computers. Furthermore, as for the working state determination device, a learning device including the acquisition unit and the learning unit and a determination device including the acquisition unit and the determination unit may be implemented by different computers.

In addition, the learning processing and the determination control processing executed by the CPU reading software (program) in the embodiment may be executed by various processors other than the CPU. Examples of the processor in this case include a programmable logic device (PLD) in which a circuit configuration can be changed after manufacturing a field-programmable gate array (FPGA) or the like, a dedicated electric circuit that is a processor having a circuit configuration exclusively designed for executing specific processing such as an application specific integrated circuit (ASIC), and the like. Furthermore, the learning processing and the determination control processing may be executed by one of these various processors, or may be executed by a combination of two or more processors of the same type or different types (for example, a plurality of FPGAs, a combination of a CPU and an FPGA, and the like). More specifically, the hardware structure of these various processors is an electric circuit in which circuit elements such as semiconductor elements are combined.

In the embodiment, the aspect in which the working state determination program is stored (installed) in the storage device in advance has been described, but the present invention is not limited thereto. The program may be provided in a form stored in a storage medium such as a CD-ROM, a DVD-ROM, a Blu-ray disk, or a USB memory. In addition, the program may be downloaded from an external device via a network.

The present embodiment is applicable to an industrial robot, a service robot, or the like having a function of executing automatic insertion or fitting work such as insertion of a connector or fitting of a lid component.

Description of Reference Numerals

| 10 | Working state determination device |
| 12 | CPU |
| 14 | Memory |
| 16 | Storage device |
| 18 | Input device |
| 20 | Output device |
| 22 | Storage medium reading device |
| 24 | Communication I/F |
| 26 | Bus |
| 32 | Acquisition unit |
| 34 | Learning unit |
| 36 | Determiner |
| 36A | First determiner |
| 36B | Second determiner |
| 38 | Determination unit |
| 40 | Control unit |
| 50 | Robot unit |
| 52 | Manipulator |
| 54 | Force sensor |
| 56 | Gripper |
| 60 | Main workpiece |
| 62 | Sub-workpiece |
| 100 | Robot system |

Claims

1. A working state determination device, comprising:

an acquisition unit configured to acquire data detected by a force sensor that detects a force acting on a hand tip portion of a robot hand; and a determination unit configured to determine a working state of the robot hand by inputting data acquired by the acquisition unit to a determiner that determines the working state of the robot hand and in which a first determiner that extracts a feature of a normal working state and a second determiner that extracts a feature of an abnormal working state are coupled, the determiner outputting three states as the working state, the three states being a work completion state, a work continuation state, and a work continuation impossible state.

2. The working state determination device according to claim 1, wherein time-series data acquired by the acquisition unit is input to the determiner, and a time duration of data input to the second determiner is longer than a time duration of data input to the first determiner.

3. The working state determination device according to claim 2, wherein the time duration for the first determiner is a time duration corresponding to a transient response of data generated at a time of work completion, and the time duration for the second determiner is a time duration corresponding to a time until an abnormality occurs and an operation of the robot hand is stopped.

4. The working state determination device according to any one of claims 1 to 3, wherein the first determiner is learned by using learning data in which each piece of data before transition of time-series data in a case in which a working state transitions from work continuation to work completion is labeled as work continuation and data after transition is labeled as work completion, and the second determiner is learned by using learning data in which data before transition of the time-series data in a case in which a working state transitions from work continuation to work continuation impossible is labeled as work continuation and data after transition is labeled as work continuation impossible.

5. The working state determination device according to claim 4, further comprising a learning unit configured to execute learning of the determiner by using the learning data.

6. The working state determination device according to claim 5, wherein the learning unit is configured to generate pseudo learning data using the learning data and a random number, add the pseudo learning data to the learning data, and use the pseudo learning data for learning of the determiner.

7. The working state determination device according to any one of claims 1 to 6, wherein:

the acquisition unit is configured to further acquire a position of the hand tip portion of the robot hand, and the determination unit is configured to determine the working state by inputting data detected by the force sensor and the position of the hand tip portion to the determiner.

8. The working state determination device according to any one of claims 1 to 7, wherein the determiner includes a first neural network constituting the first determiner and a second neural network constituting the second determiner, and outputs a result obtained by combining an output of the first neural network and an output of the second neural network.

9. The working state determination device according to any one of claims 1 to 7, further comprising a control unit configured to control operation of the robot hand based on the working state determined by the determination unit.

10. A working state determination method, wherein:

an acquisition unit is configured to acquire data detected by a force sensor that detects a force acting on an hand tip portion of a robot hand; and a determination unit is configured to determine a working state of the robot hand by inputting data acquired by the acquisition unit to a determiner that determines the working state of the robot hand and in which a first determiner that extracts a feature of a normal working state and a second determiner that extracts a feature of an abnormal working state are coupled, the determiner outputting three states as the working state, the three states being a work completion state, a work continuation state, and a work continuation impossible state.

11. A working state determination program of causing a computer to function as:

an acquisition unit configured to acquire data detected by a force sensor that detects a force acting on an hand tip portion of a robot hand, and a determination unit configured to determine a working state of the robot hand by inputting data acquired by the acquisition unit to a determiner that determines the working state of the robot hand and in which a first determiner that extracts a feature of a normal working state and a second determiner that extracts a feature of an abnormal working state are coupled, the determiner outputting three states as the working state, the three states being a work completion state, a work continuation state, and a work continuation impossible state.

FIG.1

100

50

52

54

56

60

62

10

WORKING STATE DETERMINATION DEVICE

FIG.2

| WORKING STATE | | |
|---|---|---|
| WORK COMPLETION | WORK CONTINUATION IMPOSSIBLE | WORK CONTINUATION |

EP 4 338 899 A1

FIG.3

# FIG.4

FIG.5

FIG.6

EP 4 338 899 A1

# FIG.7

LEARNING PROCESSING

ACQUIRE LEARNING DATA —— S10

DETERMINE TIME WIDTH T1 OF FIRST DETERMINER AND TIME WIDTH T2 OF SECOND DETERMINER —— S12

FIX $T_i$ AND DETERMINE PARAMETERS $U_i$, $W_i$, AND $b_i$ INCLUDED IN INPUT LAYER AND INTERMEDIATE LAYER OF DETERMINER $i \in [1; 2]$ —— S14

FIX $T_i$, $U_i$, $W_i$, AND $b_i$ AND DETERMINE PARAMETERS $V_i$ AND $c$ INCLUDED IN OUTPUT LAYER OF DETERMINER $i \in [1; 2]$ —— S16

STORE DETERMINER IN WHICH PARAMETERS HAVE BEEN DETERMINED —— S18

END

# FIG.8

```
┌─────────────────────────────┐
│   DETERMINATION CONTROL      │
│       PROCESSING             │
└─────────────────────────────┘
              │
┌─────────────────────────────┐
│  ACQUIRE FORCE SENSOR VALUE  │ ～ S20
│   AND JOINT ANGLE VALUE      │
└─────────────────────────────┘
              │
┌─────────────────────────────┐
│   CALCULATE ARM TIP POSITION │ ～ S22
│   BASED ON JOINT ANGLE VALUE │
└─────────────────────────────┘
              │
┌─────────────────────────────┐
│  INPUT FORCE SENSOR VALUE AND│ ～ S24
│  ARM TIP POSITION AS TARGET  │
│  DATA TO DETERMINER, AND     │
│  DETERMINE WORKING STATE     │
└─────────────────────────────┘
              │
┌─────────────────────────────┐
│ DETERMINE ACTION OF          │ ～ S26
│ MANIPULATOR ACCORDING TO     │
│ WORKING STATE                │
└─────────────────────────────┘
              │
┌─────────────────────────────┐
│ GENERATE CONTROL INFORMATION │ ～ S28
│ FOR EXECUTING DETERMINED     │
│ ACTION AND OUTPUT GENERATED  │
│ CONTROL INFORMATION          │
└─────────────────────────────┘
              │
        ┌───────────┐
        │    END    │
        └───────────┘
```

# FIG.9

ORIGINAL LEARNING DATA

PSEUDO LEARNING DATA

· · ·

EP 4 338 899 A1

## INTERNATIONAL SEARCH REPORT

| International application No. |
|---|
| **PCT/JP2022/015156** |

**A. CLASSIFICATION OF SUBJECT MATTER**

***B25J 13/08***(2006.01)i
FI: B25J13/08 Z

According to International Patent Classification (IPC) or to both national classification and IPC

**B. FIELDS SEARCHED**

Minimum documentation searched (classification system followed by classification symbols)

B25J13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-14682 A (TOSHIBA CERAMICS CO., LTD.) 15 January 2004 (2004-01-15) paragraphs [0012]-[0027] | 1, 7, 9-11 |
| Y | | 8 |
| A | | 2-6 |
| Y | JP 2001-243210 A (KDDI CORP.) 07 September 2001 (2001-09-07) fig. 1 | 8 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 338 899 A1

INTERNATIONAL SEARCH REPORT
Information on patent family members

International application No.

PCT/JP2022/015156

| Patent document cited in search report | | | Publication date (day/month/year) | Patent family member(s) | Publication date (day/month/year) |
|---|---|---|---|---|---|
| JP | 2004-14682 | A | 15 January 2004 | (Family: none) | |
| JP | 2001-243210 | A | 07 September 2001 | (Family: none) | |

Form PCT/ISA/210 (patent family annex) (January 2015)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011230245 A

**Non-patent literature cited in the description**

- **M. KARLSSON ; A. ROBERTSSON ; R. JOHANSSON.** Detection and control of contact force transients in robotic manipulation without a force sensor. *2018 IEEE International Conference on Robotics and Automation (ICRA),* 2018